(19) Europäisches Patentamt
European Patent Office
Office européen des brevets

(11) EP 4 553 985 A1

(12) EUROPEAN PATENT APPLICATION
published in accordance with Art. 153(4) EPC

(43) Date of publication:
14.05.2025 Bulletin 2025/20

(51) International Patent Classification (IPC):
H01M 50/449 (2021.01)    H01M 50/446 (2021.01)
H01M 50/417 (2021.01)    H01M 50/431 (2021.01)
H01M 10/052 (2010.01)

(21) Application number: 24767420.3

(22) Date of filing: 06.03.2024

(52) Cooperative Patent Classification (CPC):
H01M 10/052; H01M 50/417; H01M 50/431;
H01M 50/446; H01M 50/449

(86) International application number:
PCT/KR2024/002904

(87) International publication number:
WO 2024/186132 (12.09.2024 Gazette 2024/37)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.03.2023 KR 20230030218

(71) Applicant: LG Energy Solution, Ltd.
Seoul 07335 (KR)

(72) Inventors:
• BAE, Won-Sik
Daejeon 34122 (KR)
• LEE, So-Yeong
Daejeon 34122 (KR)
• SUNG, Dong-Wook
Daejeon 34122 (KR)

(74) Representative: Hoffmann Eitle
Patent- und Rechtsanwälte PartmbB
Arabellastraße 30
81925 München (DE)

(54) SEPARATOR FOR ELECTROCHEMICAL DEVICE

(57)    The present disclosure relates to a separator and an electrochemical device including the same, and the separator of the present disclosure includes a porous polyolefin substrate having improved wettability and a porous coating layer having high adhesive property to the porous polyolefin substrate. Specifically, the separator includes the porous polyolefin substrate and the porous coating layer on at least one surface of the porous polyolefin substrate, wherein the porous polyolefin substrate includes a crosslinked polyolefin resin, wherein the crosslinked polyolefin resin includes a silicon containing organic group grafted onto a polyolefin chain, wherein the porous coating layer includes inorganic particles and a binder polymer, and wherein the inorganic particles include boehmite (AlO(OH)).

EP 4 553 985 A1

**Description**

TECHNICAL FIELD

The present disclosure relates to a separator for an electrochemical device and an electrochemical device including the same.

The present application claims priority to Korean Patent Application No. 2023-0030218 filed on March 7, 2023 in the Republic of Korea, the disclosure of which is incorporated herein by reference.

BACKGROUND

Secondary batteries including lithium ion secondary batteries are widely used as a source of power for portable electronic devices such as laptop computers, mobile phones, digital cameras, camcorders and so on. Recently, these batteries are being used in a wide range of applications including vehicles due to their high energy density.

Lithium secondary batteries have much higher operating voltage and energy density than traditional batteries using aqueous electrolyte solutions such as Ni-MH, Ni-Cd, lead-acid batteries, and by virtue of these advantages, lithium secondary batteries are gaining much attention. However, lithium ion batteries have safety related risks of fire and explosion due to the use of organic electrolytes, and require a laborious and fastidious manufacturing process. More recently, lithium ion polymer batteries evolved from lithium ion batteries are regarded as one of next-generation batteries, but still have lower battery capacity than lithium ion batteries and insufficient discharge capacity especially at low temperature, so improvement is an urgently needed.

Evaluating stability and ensuring safety of electrochemical devices is very grave. **In** the safety characteristics of the electrochemical devices, there is great concern about explosion when thermal runaway occurs due to overheating or separators get punctured. In particular, polyolefin-based separator substrates commonly used as separators of electrochemical devices exhibit severe thermal shrinkage behaviors at the temperature of 100°C or above due to the material characteristics and procedural characteristics including stretching, causing short circuits between positive and negative electrodes.

To solve the safety problem of the electrochemical devices, separators have been suggested in which a separator substrate having pores has a porous inorganic coating layer on at least one surface thereof and the porous inorganic coating layer includes a mixture of an excess of inorganic particles and a binder polymer, and further, there has been the continued need for enhanced stability. For example, there is a need for enhanced adhesion strength at the interface between the porous inorganic coating layer including the excess of inorganic particles and the separator substrate.

SUMMARY

Technical Problem

The present disclosure is directed to providing a separator with enhanced wettability of a separator substrate and improved adhesion strength between the separator substrate and a porous inorganic coating layer including an excess of inorganic particles.

Accordingly, the present disclosure is directed to providing an electrochemical device with improved stability and high resistance characteristics.

Technical Solution

To solve the above-described problem, according to an aspect of the present disclosure, there is provided a separator of the following embodiments.

The separator substrate according to a first embodiment includes a porous polyolefin substrate and a porous coating layer on at least one surface of the porous polyolefin substrate, wherein the porous polyolefin substrate includes a crosslinked polyolefin resin, wherein the crosslinked polyolefin resin includes a silicon containing organic group grafted onto a polyolefin chain, wherein the porous coating layer includes inorganic particles and a binder polymer, and wherein the inorganic particles include boehmite (AlO(OH)).

According to a second embodiment, in the first embodiment, the porous polyolefin substrate may have gel fraction of from 3% to 80%, and a standard deviation ($\triangle$d) of thickness measured in at least random 100 points may be 0.5 $\mu$m or less.

According to a third embodiment, in the first or second embodiment, an adhesion strength between the porous polyolefin substrate and the porous coating layer may be 50 gf/15 mm or more.

According to a fourth embodiment, in any one of the first to third embodiments, the adhesion strength between the porous polyolefin substrate and the porous coating layer may be from 70 gf/15 mm to 95 gf/15 mm.

According to a fifth embodiment, in any one of the first to fourth embodiments, an amount of the boehmite may be 80 wt% or more based on a total weight of the inorganic particles.

According to a sixth embodiment, in the fifth embodiment, the silicon containing organic group may be a residue from a vinyl group containing silane compound, and the vinyl group containing silane compound may include vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture of two or more thereof.

According to a seventh embodiment, in any one of the first to sixth embodiments, the porous polyolefin substrate may further include chromium (Cr).

According to an eighth embodiment, in any one of the first to seventh embodiments, an amount of the chromium may be from 0.1 ppm to 20 ppm.

According to a ninth embodiment, in any one of the first to eighth embodiments, a crosslinked structure in the crosslinked polyolefin resin may include a structure derived from a result of radical polymerization reaction between vinyl groups through medium of a thermal initiator.

According to a tenth embodiment, in any one of the first to ninth embodiments, the thermal initiator may include a peroxide-based compound, a persulfate-based compound, an azo-based compound or a mixture thereof.

According to another aspect of the present disclosure, there is provided an electrochemical device of the following embodiments.

The electrochemical device according to an eleventh embodiment includes a positive electrode, a negative electrode and the separator according to any one of the first to tenth embodiments between the positive electrode and the negative electrode.

Advantageous Effects

The separator according to an embodiment of the present disclosure may exhibit high adhesion strength between the porous polyolefin substrate and the porous coating layer and high wettability of the separator substrate.

In particular, the porous polyolefin substrate as the separator substrate may include a plurality of crosslinked structures in the polyolefin chain, leading to improved thickness uniformity and heat resistance and may include the silicon containing organic group grafted onto the polyolefin chain, leading to improved wettability by electrolyte and improved adhesion strength between the porous polyolefin substrate and the porous coating layer. Additionally, the porous coating layer may include boehmite as the inorganic particles, leading to improved adhesion strength between the porous polyolefin substrate and the porous coating layer.

Accordingly, it may be possible to improve operational stability such as heat resistance characteristics in the electrochemical device including the separator using the separator substrate, but the mechanism of the present disclosure is not limited thereto.

DETAILED DESCRIPTION

Hereinafter, the present disclosure will be described in detail.

The present disclosure relates to a separator for an electrochemical device and an electrochemical device including the same. In the present disclosure, the electrochemical device is a device that converts chemical energy to electrical energy by electrochemical reactions, and is a concept encompassing primary batteries and secondary batteries. The secondary batteries can be recharged, and are a concept encompassing lithium ion batteries, nickel-cadmium batteries, nickel-hydrogen batteries and so on.

In an embodiment of the present disclosure, the separator for the electrochemical device may be a Safety Reinforced Separator (SRS), a Ceramic Coated Separator (CCS), or a separator formed through any other known manufacturing method.

In an embodiment of the present disclosure, the SRS is gaining attention because a liquid binder resin, i.e., a binder resin containing solution is generally used to form the porous coating layer in a manufacturing method, and the liquid binder resin is infiltrated into a porous separator substrate, thereby improving the adhesion strength between the separator substrate and the porous coating layer. However, there is still a need to overcome weak bond strength between the separator substrate and the liquid binder resin due to the hydrophobic property of the separator substrate as commonly exhibited or low adhesive strength inherent in the porous coating layer due to a large quantity of inorganic particles included in the porous coating layer.

In another embodiment of the present disclosure, as known, fundamentally, the CCS has lower adhesion strength between the separator substrate and the porous coating layer than the SRS because an absolute quantity of binder resin used in the manufacturing method is generally lower than that of the SRS and a particulate binder resin is used when forming the porous coating layer.

According to an aspect of the present disclosure, the manufacturing method is not limited to a particular one and may include the SRS manufacturing method, the CCS manufacturing method or any other known manufacturing method to provide the separator having high adhesion strength between the separator substrate and the porous coating layer.

To this end, the separator for the electrochemical device according to an aspect of the present disclosure includes the separator substrate having improved heat resistance and wettability as described below and the porous coating layer having high adhesion strength with the separator substrate.

Specifically, the separator includes a porous polyolefin substrate and a porous coating layer on at least one surface of the porous polyolefin substrate,

wherein the porous polyolefin substrate includes a crosslinked polyolefin resin, the crosslinked polyolefin resin includes a silicon containing organic group grafted onto a polyolefin chain, and
the porous coating layer includes inorganic particles and a binder polymer, and the inorganic particles include boehmite (AlO(OH)).

According to an embodiment of the present disclosure, the porous polyolefin substrate may includes the crosslinked polyolefin resin and chromium (Cr).

To begin with, the porous polyolefin substrate as the separator substrate with improved heat resistance and wettability will be described in detail.

Porous polyolefin substrate

The porous polyolefin substrate is a separator substrate for an electrochemical device including a crosslinked polyolefin resin, and the crosslinked polyolefin resin includes a silicon containing organic group grafted onto the polyolefin chain.

**In** an embodiment of the present disclosure, the crosslinked polyolefin resin may include chromium (Cr) that originates from a chromium (Cr) containing catalyst used to produce polyolefin, but the present disclosure is not limited thereto.

In an embodiment of the present disclosure, in the porous polyolefin substrate, gel fraction may be from 3% to 80%.

In an embodiment of the present disclosure, in the porous polyolefin substrate, the standard deviation $\triangle$d of thickness measured in at least random 100 points may be 0.5 $\mu$m or less.

In another embodiment of the present disclosure, in the porous polyolefin substrate, the gel fraction may be from 3% to 80%, and the standard deviation $\triangle$d of thickness measured in at least random 100 points may be 0.5 $\mu$m or less.

In an embodiment of the present disclosure, in the porous polyolefin substrate, the number of spots having the long side of 50 $\mu$m or more in length per 1 m$^2$ may be 10 or less.

In another embodiment of the present disclosure, in the porous polyolefin substrate, the gel fraction may be from 3% to 80%, the standard deviation $\triangle$d of thickness measured in at least random 100 points may be 0.5 $\mu$m or less and the number of spots having the long side of 50 $\mu$m or more in length per 1 m$^2$ may be 10 or less.

According to an embodiment of the present disclosure, the polyolefin resin is not limited to a particular monomer, and may be made from any type of monomer used for the porous separator substrate. For example, the polyolefin resin may include a homopolymer of a monomer selected from polyethylene, polypropylene, polybutylene, polypentene, polyhexene, polyoctene, ethylene, propylene, butene, pentene, 4-methylpentene, hexene and octene; a copolymer of two or more of them; or a mixture thereof, but is not limited thereto.

In the specification, in a method for manufacturing the porous polyolefin substrate, as described below, the polyolefin resin includes a polyolefin resin produced using an olefin polymerization catalyst including chromium (Cr), and thus the porous polyolefin substrate may include chromium (Cr). Specifically, the porous polyolefin substrate includes chromium as the residue of the chromium catalyst used in the polymerization of the polyolefin resin.

In an embodiment of the present disclosure, the olefin polymerization catalyst including chromium may include, for example, chromium oxide; and a support for chromium oxide loading, and the support may include, for example, at least one of silica, titania, alumina, zirconia or aluminum phosphate, but the present disclosure is not limited thereto.

In an embodiment of the present disclosure, the amount of chromium included in the porous polyolefin substrate may be, for example, from 0.1 to 20 ppm, from 1 to 10 ppm or from 5 to 10 ppm, but is not limited thereto. The amount of chromium in the porous polyolefin substrate may be, for example, a measured value using an Inductively coupled plasma with Mass Spectrometer (ICP-MS). When the amount of chromium included in the porous polyolefin substrate lies in the aforementioned range, this may have a beneficial effect on the number of vinyl groups in the polyolefin resin before crosslinking and the degree of crosslinking of the crosslinked polyolefin resin produced using the same, but the present disclosure is not limited thereto.

According to an embodiment of the present disclosure, the polyolefin resin produced using the olefin polymerization catalyst including chromium includes a large amount of terminal vinyl groups in active state that can be crosslinked by a thermal initiator included in a coating solution in the subsequent process. Accordingly, the porous polyolefin substrate may include a polyolefin resin having a plurality of crosslinked structures between polyolefin chains by crosslinking reaction induced by the thermal initiator.

Additionally, according to an embodiment of the present disclosure, the polyolefin resin produced using the olefin polymerization catalyst including chromium includes a large amount of terminal vinyl groups in active state that provide the grafting position of a vinyl group containing silane compound included in the coating solution in the subsequent process. Accordingly, the porous polyolefin substrate may include the silicon containing organic group by the grafting of the plurality of vinyl group containing silane compounds through the terminal vinyl groups.

In an embodiment of the present disclosure, the silicon containing organic group grafted onto the polyolefin chain may be present on the surface part of the porous polyolefin substrate, thereby adding polarity to the surface of the porous polyolefin substrate and improving chemical affinity with the inorganic particles in the porous coating layer on the porous polyolefin substrate.

In the specification, the 'crosslinked polyolefin resin' refers to a polyolefin resin in which the vinyl group present in the chain of the polyolefin resin used as the raw material of the porous polyolefin substrate is activated by initiation reaction to form a crosslinked structure in the chain of the polyolefin resin and/or between chains.

Specifically, the crosslinked polyolefin resin may include a crosslinked structure in which the vinyl group present at a terminal in the polyolefin chain is activated by the thermal initiator to form a radical, followed by polymerization reaction of the radical with a radical in the polyolefin chain of other molecule and/or a radical at other terminal in the polyolefin chain of the same molecule to form $C(Sp^2)$- $C(Sp^2)$ bonds.

Additionally, in an embodiment of the present disclosure, the 'silicon containing organic group grafted onto the polyolefin chain' may be the residue from the vinyl group containing silane compound upon activation of the vinyl group present in the chain of the polyolefin resin used as the raw material of the porous polyolefin substrate and the vinyl group present in the vinyl group containing silane compound by the initiation reaction, forming new covalent bonds at the activated site.

In an embodiment of the present disclosure, the silicon containing organic group may be the organic residue from the vinyl group containing silane compound, and the vinyl group containing silane compound may include, for example, vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture of two or more thereof, but the present disclosure is not limited thereto.

In an embodiment of the present disclosure, the crosslinked polyolefin resin may not include a terminal vinyl group, or may include a smaller number of terminal vinyl groups than the number of terminal vinyl groups present in the polyolefin resin before crosslinking.

In the similar aspect, the crosslinked polyolefin resin may include a larger number of $C(Sp^2)$- $C(Sp^2)$ bonds than the number of $C(Sp^2)$- $C(Sp^2)$ bonds included in the polyolefin resin before crosslinking.

In an embodiment of the present disclosure, the polyolefin resin produced using the olefin polymerization catalyst including chromium may include 100 or more, 200 or more, 300 or more, 400 or more, 500 or more, 600 or more, 700 or more, 800 or more, 900 or more or 950 or more terminal vinyl groups per 1,000,000 carbons when determining the number of functional groups from 1H-NMR spectrum results using a nuclear magnetic resonance spectrometer (Bruker 500 NMR, 14.1 telsa). The upper limit of the number of terminal vinyl groups may be 1,500 or less or 1,000 or less in the aforementioned range, but is not limited thereto.

Accordingly, in an embodiment of the present disclosure, the number of terminal vinyl groups of the polyolefin resin before crosslinking may be, for example, 100 or more, 200 or more, 300 or more, 400 or more, 500 or more, 600 or more, 700 or more, 800 or more, 900 or more or 950 or more per 1,000,000 carbons.

In another embodiment of the present disclosure, when the porous polyolefin substrate includes a polyolefin resin produced using a catalyst other than the olefin polymerization catalyst including chromium together, the number of terminal vinyl groups of the polyolefin resin before crosslinking and the amount of terminal vinyl groups of the polyolefin resin before crosslinking are preferably measured based on the number of terminal vinyl groups and the amount of terminal vinyl groups of the total polyolefin resin.

As described above, the crosslinked structure in the crosslinked polyolefin resin includes a structure derived from the result of radical polymerization reaction between the vinyl groups through the medium of the thermal initiator.

In an embodiment of the present disclosure, the thermal initiator may include, without limitation, any type of initiator that activates the vinyl group present in the polyolefin chain to form a radical. Specifically, the thermal initiator may include, without limitation, any type of initiator that activates the terminal vinyl group present in the polyolefin chain to form a radical. The thermal initiator may include, for example, a peroxide-based compound, a persulfate-based compound, an azo-based compound or a mixture thereof.

The peroxide-based compound may include, for example, 2,5-dimethyl-2,5-di(tert-butylperoxy)hexane (DHBP), benzoyl peroxide, acetyl peroxide, dilauryl peroxide, di-tert-butyl peroxide, dicumyl peroxide, cumyl peroxide, hydrogen peroxide or a mixture of two or more thereof, but is not limited thereto.

The persulfate-based compound may include, without limitation, any compound including at least one of peroxymonosulfate ion ($SO_5^{2-}$) or peroxydisulfate ($S_2O_8^{2-}$) as an anion. The persulfate-based compound may include, for example, sodium peroxymonosulfate ($Na_2SO_5$), potassium peroxymonosulfate ($KHSO_5$), sodium peroxydisulfate ($Na_2S_2O_8$), ammonium peroxydisulfate (($NH_4$)$_2S_2O_8$), potassium peroxydisulfate ($K_2S_2O_8$) or a mixture thereof of two or more, but is not limited thereto.

The azo-based compound may include, for example, 2,2'-azobis(2-methylpropionitrile) (AIBN), but is not limited thereto.

In an embodiment of the present disclosure, in addition to the polyolefin resin produced from the olefin polymerization catalyst including chromium as described above, the porous polyolefin substrate may further include a polyolefin resin produced from another type of olefin polymerization catalyst.

The other type of olefin polymerization catalyst may be, for example, an olefin polymerization catalyst including at least one of titanium (Ti), aluminum (Al), magnesium (Mg), zirconium (Zr) or vanadium (V). Accordingly, the separator substrate may further include, for example, at least one of titanium (Ti), aluminum (Al), magnesium (Mg), zirconium (Zr) or vanadium (V).

In an embodiment of the present disclosure, the other type of olefin polymerization catalyst may include, for example, a metallocene catalyst, a Ziegler-Natta catalyst, or a mixture thereof, but the present disclosure is not limited thereto.

In the specification, the polyolefin resin produced using the chromium containing olefin polymerization catalyst may be referred to as 'Cr-type polyolefin', and the polyolefin resin produced using the other type of olefin polymerization catalyst may be referred to as 'ZT-type polyolefin'.

In an embodiment of the present disclosure, when the porous polyolefin substrate includes the polyolefin resin produced using the olefin polymerization catalyst including chromium and the polyolefin resin produced using another type of olefin polymerization catalyst, a weight ratio of the Cr-type polyolefin to the ZT-type polyolefin may be, for example, from 1:9 to 9:1, specifically from 2:8 to 8:2, from 3:7 to 7:3, or 5:5, but is not limited thereto. When the separator substrate includes the Cr-type polyolefin and the ZT-type polyolefin together, it may be possible to increase the molecular weight of the separator substrate by the ZT-type polyolefin having high molecular weight, but the present disclosure is not limited thereto.

In an embodiment of the present disclosure, in addition to the polyolefin, the separator may further include, for example, at least one type of polymer resin of polyethylene terephthalate, polybutylene terephthalate, polyacetal, polyamide, polycarbonate, polyimide, polyetheretherketone, polyethersulfone, polyphenyleneoxide, polyphenylenesulfide or polyethylenenaphthalene as the raw material of the separator substrate. Additionally, the porous polyolefin substrate may include a nonwoven fabric, a porous polymer film or a stack of two or more of them, but is not particularly limited thereto.

In an embodiment of the present disclosure, as described below, the porous polyolefin substrate includes the polyolefin resin produced using the olefin polymerization catalyst including chromium, and in the process of manufacturing the separator substrate, when the polyolefin sheet derived from the polyolefin resin is heat-set, the crosslinked structure is formed in the chain in the polyolefin resin and/or between chains by the radical polymerization reaction through the medium of the thermal initiator, thereby improving thickness uniformity and heat resistance of the porous polyolefin substrate and improving appearance characteristics of the porous polyolefin substrate. Additionally, when the polyolefin sheet derived from the polyolefin resin is heat-set, the vinyl group containing silane compound is grafted, thereby improving wettability of the porous polyolefin substrate, but the mechanism of the present disclosure is not limited thereto.

According to an embodiment of the present disclosure, the porous polyolefin substrate has gel fraction of from 3% to 80%. This feature may be found in the porous polyolefin substrate including the polyolefin resin having a high degree of crosslinking, but the characteristics of the present disclosure are not limited thereto. The gel fraction of the porous polyolefin substrate may be, for example, from 3% to 70%, from 3% to 60%, from 3% to 50%, from 3% to 45%, from 3% to 40%, from 3% to 30%, from 3% to 20% or from 3% to 10%.

As described above, the polyolefin resin is characterized by exhibiting a high degree of crosslinking by the crosslinked structure in the polyolefin chain and/or between chains. Accordingly, the polyolefin resin before crosslinking dissolves in a benzene-based solvent, while the crosslinked polyolefin resin does not dissolve in a benzene-based solvent, making it possible to measure the gel fraction.

In the specification, the gel fraction may be measured by the following method. First, 0.2 g of a separator substrate sample to be measured was placed in a 120 mesh stainless steel sieve, followed by extraction in 100°C trichlorobenzene for 12 hours, and drying in a 100°C vacuum oven for 12 hours. Subsequently, the weight of the sample remaining in the stainless steel sieve is measured and the gel fraction is measured according to the following equation. The gel fraction may be an average of measured values of 3 samples to improve measurement accuracy.

$$\text{Gel fraction (\%)} = \{(\text{remaining sample weight g})/0.2\text{ g}\} \times 100$$

Gel fraction (%) = {(remaining sample weight g)/0.2 g} X 100

In an embodiment of the present disclosure, the standard deviation $\triangle d$ of thickness measured in at least random 100 points of the porous polyolefin substrate is 0.5 $\mu$m or less. Accordingly, the separator substrate may have high thickness uniformity.

In an embodiment of the present disclosure, the standard deviation $\triangle d$ of thickness measured in at least random 100 points of the porous polyolefin substrate may be, for example, 0.5 $\mu$m or less, 0.45 $\mu$m or less, 0.40 $\mu$m or less, 0.35 $\mu$m or less, 0.3 $\mu$m or less, or 0.25 $\mu$m or less. As the standard deviation is closer to 0, the thickness uniformity increases, and the lower limit of the standard deviation of thickness may be 0.

The thickness of the separator substrate may be measured by a method for measuring the thickness of the separator substrate, and for example, may be a measured value through scanning electron microscopy (SEM) image analysis of the separator substrate or a known thickness measuring instrument. The thickness measuring instrument may include, for example, VL-50S-B (Mitutoyo), but is not limited thereto.

In general, in the manufacture of the separator substrate, when the polymer resin as the raw material and additives such as a diluent and a crosslinking agent are fed into the extruder all at once to cause reaction, side reaction occurs in the extruder, and spots having a difference in brightness compared to other area are observed on the surface of the separator substrate by unmolten raw materials due to poor mixing between the raw materials.

In the specification, the 'spot' refers to an area having a white spot shape due to higher brightness and lower transparency on the surface of the separator substrate than the surrounding area.

In an embodiment of the present disclosure, the number of spots may be evaluated through observation with the naked eye or microscopy observation such as SEM.

According to an embodiment of the present disclosure, the porous polyolefin substrate may have fewer spots and little defects in outward appearance by feeding the polyolefin resin as the raw material, forming the polyolefin sheet, and adding the thermal initiator and the vinyl group containing silane compound. For example, the separator substrate may have 10 or less spots having the long side of 50 $\mu$m or more in length per $m^2$. Specifically, in the above-described conditions, the number of spots may be from 0 to 7, from 0 to 5, from 0 to 3, or 0. When the number of spots lies in the aforementioned range, it may be advantageous for preventing non-coating caused by defects in outward appearance in the subsequent ceramic coating process and shorting in the battery.

In another embodiment of the present disclosure, the thickness of the porous polyolefin substrate may be, for example, from 4 $\mu$m to 20 $\mu$m. When the thickness of the porous polyolefin substrate lies in the aforementioned range, this may have a beneficial effect on conductive barrier function and resistance of the separator, but the present disclosure is not limited thereto.

In an embodiment of the present disclosure, the weight average molecular weight Mw of the polyolefin resin included in the porous polyolefin substrate may be, for example, in a range between 100,000 and 5,000,000. When the weight average molecular weight of the polyolefin resin lies in the aforementioned range, this may have a beneficial effect on mechanical properties and shutdown characteristics of the separator substrate, but the present disclosure is not limited thereto.

In the specification, the weight average molecular weight Mw of the polyolefin resin may be measured through gel permeation chromatography (GPC, PL GPC220, Agilent Technologies) in the following conditions.

- Column: PL Olexis (Polymer Laboratories)
- Solvent: Trichlorobenzene (TCB)
- Flow rate: 1.0 ml/min
- Sample concentration: 1.0 mg/ml
- Injection amount: 200 $\mu\ell$
- Column temperature: 160°C
- Detector: Agilent High Temperature RI detector
- Standard: Polystyrene (third-degree polynomial fit)

In an embodiment of the present disclosure, the porous polyolefin substrate may have a structure including a plurality of micropores, and for example, the average pore diameter may be from 0.01 $\mu$m to 0.10 $\mu$m, and the porosity may be from 30% to 70%. When the average pore diameter and the porosity of the porous polyolefin substrate lie in the aforementioned ranges, this may have a beneficial effect on ion permeability and mechanical strength of the separator using the same, but the present disclosure is not limited thereto.

In an embodiment of the present disclosure, the porous polyolefin substrate may have high heat resistance. For example, the porous polyolefin substrate may have fracture temperature of 155°C or more. For example, the fracture temperature of the porous polyolefin substrate may be 160°C or more, 170°C or more, 180°C or more, 190°C or more, 195°C or more, and further, 200°C or more. As the fracture temperature of the porous polyolefin substrate is higher, the porous polyolefin substrate has heat resistance, and the upper limit of the fracture temperature of the porous polyolefin substrate may not be limited to a particular range, and may be, for example, 500°C or less, 450°C or less, 350°C or less, or 300°C or less.

In the specification, the fracture temperature of the porous polyolefin substrate may be measured using a thermal mechanical analyzer (TMA) by applying a 0.01 N load to the porous polyolefin substrate sample to be measured, observing the extent of deformation while increasing the temperature at a rate of 5°C/min, and as the temperature rises, the porous polyolefin substrate shrinks and expands, and the temperature at break may be measured as the fracture temperature.

In an embodiment of the present disclosure, the porous polyolefin substrate including the silicon containing organic group grafted onto the polyolefin chain as described above may have improved wettability.

In an embodiment of the present disclosure, the 'wettability' of the porous polyolefin substrate refers to a degree of wetting by electrolyte, and may be evaluated by methods commonly used to evaluate how much an electrolyte solution is infiltrated, and for example, may be evaluated by adding a predetermined amount of electrolyte solution dropwise to the porous polyolefin substrate and measuring an area to which the electrolyte solution spread after a predetermined time. It may be evaluated that the wider area to which the drops of electrolyte solution spread for the same time, the higher wettability by the electrolyte solution.

The porous polyolefin substrate includes the polyolefin resin produced using the olefin polymerization catalyst including chromium, wherein the crosslinked structure is formed between the polyolefin chains by the use of the thermal initiator and the vinyl group containing silane compound when heat-setting the oriented polyolefin sheet from the polyolefin resin and includes the grafted silicon containing organic group, thereby improving appearance characteristics, thickness uniformity, heat resistance and wettability, but the present disclosure is not limited thereto.

Subsequently, the porous coating layer having high adhesion strength with the above-described porous polyolefin substrate will be described in detail.

Porous coating layer

The porous coating layer includes a binder resin and inorganic particles and has a plurality of micropores inside wherein the micropores are connected to each other, and has a structure of a porous layer that allows air or a liquid to pass from a side to an opposite side.

In an embodiment of the present disclosure, the porous coating layer may have a porous structure resulting from pores corresponding to voids (interstitial volume) between the inorganic particles. The pore size or porosity (a volume ratio of pores) may be adjusted according to the particle size and particle size distribution. This structure may increase resistance to metal impurities present in the electrode and suppress shrinkage of the porous polyolefin substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament made from the binder polymer of the nodes in the shape of thread, wherein the filament has a node connection part that extends from the node and connects the node to other node, and the node connection part has a 3-dimensional network structure formed by interconnection of the filaments originating from the binder polymer.

In an embodiment of the present disclosure, as described above, the porous coating layer may be formed through a Safety Reinforced Separator (SRS) manufacturing method, a Ceramic Coated Separator (CCS) manufacturing method, or any other known manufacturing method.

As described above, according to an embodiment of the present disclosure, the porous polyolefin substrate may include the silicon containing organic group grafted onto the polyolefin chain, thereby improving wettability. In particular, the silicon containing organic group grafted onto the polyolefin chain may be present on the surface part of the porous polyolefin substrate, thereby adding polarity to the surface of the porous polyolefin substrate, and improving chemical affinity with the inorganic particles in the porous coating layer on the porous polyolefin substrate.

According to an aspect of the present disclosure, the porous coating layer having improved adhesion strength with the porous polyolefin substrate having improved wettability as described above may achieve the outstanding characteristics of the separator without limitation to the method for manufacturing the separator, and improve the characteristics of the electrochemical device using the same.

To this end, the porous coating layer includes boehmite (AlO(OH)) as the inorganic particles.

According to an embodiment of the present disclosure, due to the -OH functional group of the boehmite, aluminum containing inorganic particles may have high adhesion strength with the porous polyolefin substrate of the present disclosure, but the present disclosure is not limited thereto.

According to an embodiment of the present disclosure, the separator may, for example, have the adhesion strength of 50 gf/15 mm or more between the porous polyolefin substrate and the porous coating layer. Specifically, the adhesion strength between the porous polyolefin substrate and the porous coating layer may be from 50 gf/15 mm to 100 gf/15 mm, from 50 gf/15 mm to 95 gf/15 mm, from 55 gf/15 mm to 95 gf/15 mm, from 60 gf/15 mm to 95 gf/15 mm, from 65 gf/15 mm to 95 gf/15 mm, from 70 gf/15 mm to 95 gf/15 mm, from 75 gf/15 mm to 90 gf/15 mm, or from 80 gf/15 mm to 85 gf/15 mm. When the adhesion strength between the porous polyolefin substrate and the porous coating layer lies in the aforementioned range, it may be advantageous for improving the performance of the electrochemical device using the separator, but the present disclosure is not limited thereto.

In the specification, the adhesion strength between the porous polyolefin substrate and the porous coating layer may be measured by methods commonly used to measure the peel strength between the porous polyolefin substrate and the porous coating layer, and for example, may be measured by the following method. A double sided adhesive tape is attached to a glass plate, and the target separator tailored into a size of 15mm X 100mm is attached such that the surface of the porous coating layer is adhered to the adhesive tape. Subsequently, the end portion of the attached separator is mounted on UTM instrument, and a force is applied 180° at the measurement rate of 300 mm/min to measure a force required to peel the porous coating layer off from the separator substrate. In this instance, the UTM instrument used is not limited to a particular type, and may include, for example, LLOYD Instrument LF Plus.

In an embodiment of the present disclosure, to exhibit high adhesion strength with the separator substrate, the porous coating layer may include boehmite (AlO(OH)) as the inorganic particles, and specifically the amount of the boehmite may be, for example, 80 wt% or more based on the total weight of the inorganic particles included in the porous coating layer. More specifically, the amount of the boehmite may be, for example, from 80 wt% to 100 wt%, from 85 wt% to 99 wt%, from 90 wt% to 95 wt%, from 95 wt% to 99 wt%, or from 95 wt% to 100 wt% based on the total weight of the inorganic particles included in the porous coating layer, but the present disclosure is not limited thereto.

In another embodiment of the present disclosure, the porous coating layer may further include inorganic particles commonly used in the porous coating layer other than boehmite as the inorganic particles without hindering the objective of the present disclosure.

The inorganic particles that may be further included are not limited to a particular type and may include any type of inorganic particles that are electrochemically stable. That is, the inorganic particles that may be further included in the present disclosure are not limited to a particular type and may include any type of inorganic particles in which oxidation and/or reduction reaction does not occur in the operating voltage range (*e.g.*, 0 to 5V vs Li/Li$^+$) of the electrochemical device applied. In particular, when high dielectric constant inorganic particles are further used as the inorganic particles, it may be possible to contribute to the increased degree of dissociation of an electrolyte salt, for example, a lithium salt, in a liquid electrolyte, thereby improving the ionic conductivity of the electrolyte solution.

In an embodiment of the present disclosure, specifically, the inorganic particles that may be further included, may include alumina ($Al_2O_3$), aluminum hydroxide ($Al(OH)_3$), silica ($SiO_2$), titanium dioxide ($TiO_2$), magnesium oxide (MgO), magnesium hydroxide ($Mg(OH)_2$), zinc oxide (ZnO), barium titanate (BaTiO), aluminum nitride (AlN), boron nitride (BN), silicon carbide (SiC), beryllium oxide (BeO), potassium nitrate ($KNO_3$), ammonium dihydrogen phosphate ($NH_4H_2PO_4$), $BaTiO_3$, $Pb(Zr,Ti)O_3$ (PZT), $P_{1-x}La_xZr_{1-y}Ti_yO_3$ (PLZT, 0<x<1, 0<y<1), $Pb(Mg_{1/3}Nb_{2/3})O_3$-$PbTiO_3$ (PMN-PT), hafnia ($HfO_2$), $SrTiO_3$, $SnO_2$, $CeO_2$, NiO, CaO, $ZrO_2$, SiC and $TiO_2$ or a mixture of two or more thereof, but the present disclosure is not limited thereto.

In an embodiment of the present disclosure, when the inorganic particles other than boehmite are further included as the inorganic particles, the amount of the inorganic particles further included may be, for example, 20 wt% or more, specifically 15 wt% or less, 10 wt% or less, 5 wt% or less, 1 wt% or less, but the present disclosure is not limited thereto.

In an embodiment of the present disclosure, the average particle size $D_{50}$ of the inorganic particles is not limited to a particular range but may be preferably in a range between 0.01 $\mu$m and 2 $\mu$m, and specifically between 0.5 $\mu$m and 1 $\mu$m to form the porous coating layer of uniform thickness and ensure optimum porosity.

In an embodiment of the present disclosure, the binder material may include an acrylic polymer, a PVDF-based polymer or a mixture thereof.

The acrylic polymer may include, for example, a (meth)acrylic polymer. The (meth)acrylic polymer may include (meth)acrylic acid ester as a monomer, and the monomer may include, for example, at least one of butyl(meth)acrylate, 2-ethylhexyl(meth)acrylate, ethyl(meth)acrylate, methyl(meth)acrylate, n-propyl(meth)acrylate, isopropyl(meth)acrylate, t-butyl(meth)acrylate, pentyl(meth)acrylate, n-oxyl(meth)acrylate, isooctyl(meth)acrylate, isononyl(meth)acrylate, lauryl(meth)acrylate and tetra decyl(meth)acrylate.

In an embodiment of the present disclosure, the acrylic polymer may include styrene-butyl acrylate.

According to an embodiment of the present disclosure, the acrylic polymer may include, for example, those having the glass transition temperature Tg of from 0°C to 80°C, specifically from 20°C to 60°C, from 30°C to 50°C, from 35°C to 45°C or from 40°C to 45°C. When the glass transition temperature of the binder material lies in the aforementioned range, this may have a beneficial effect on air permeability and adhesion strength of the porous coating layer, but the present disclosure is not limited thereto.

The PVDF-based polymer may include at least one of a homopolymer (i.e., polyvinylidene fluoride) of vinylidene fluoride, a copolymer with a monomer that can copolymerize with vinylidene fluoride and a mixture thereof. In an embodiment of the present disclosure, the monomer may include, for example, a fluorinated monomer and/or a chloride-based monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxol); and perfluoro(2,2-dimethyl-1,3-dioxol) (PDD).

In an embodiment of the present disclosure, the PVDF-based polymer may include at least one selected from polyvinylidenefluoride (PVDF), polyvinylidenefluoride-hexafluoropropylene (PVDF-HFP), polyvinylidenefluoride-chlorofluoroethylene (PVDF-CTFE), polyvinylidenefluoride-tetrafluoroethylene (PVDF-TFE) and polyvinylidenefluoride-trifluoroethylene (PVDF-TrFE).

According to an embodiment of the present disclosure, the PVDF-based polymer may include, for example, those having the glass transition temperature Tg of from -80°C to 0°C, specifically from -60°C to -20°C, from -50°C to -30°C, from -45°C to -35°C, or from - 45°C to -40°C.

When the glass transition temperature of the binder material lies in the aforementioned range, this may have a beneficial effect on air permeability and adhesion strength of the porous coating layer, but the present disclosure is not limited thereto.

In the specification, the glass transition temperature may be measured by methods commonly used to measure the glass transition temperature of polymer materials, and for example, may be measured using Differential Scanning Calorimetry (DSC) in accordance with ISO 1135762. Specifically, a graph showing a relationship between a temperature of a sample and a heat flow with a change in the temperature of the DSC sample may be obtained, and when connecting two extension lines on the graph before and after a change in slope of the graph at a location at which the slope of the graph sharply changes, the glass transition temperature may be measured at an intersection with the graph. In this instance, the temperature change may be made by increasing and decreasing the temperature at a single time or in a repeated manner at a constant speed of from 0.01°C/min to 100°C/min, for example, 10°C/min in a range between -80°C and 500°C.

According to another aspect of the present disclosure, there is provided a method for manufacturing the separator having the above-described configuration.

Method for manufacturing separator for the electrochemical device

First, according to an embodiment of the present disclosure, the porous polyolefin substrate used in the separator may be manufactured by the following method.

The method for manufacturing the porous polyolefin substrate may include, for example, the steps of: hot-melt extruding the raw material including the polyolefin resin to obtain a polymer hot-melt extrusion product; forming and stretching the obtained hot-melt extrusion product to obtain a polymer sheet; applying a coating solution including the thermal initiator and the vinyl group containing silane compound to the polymer sheet; and drying and heat-setting the polymer sheet coated with the coating solution. The polyolefin resin includes the polyolefin resin produced using the olefin polymerization catalyst including chromium.

First, the raw material including the polyolefin resin produced using the olefin polymerization catalyst including chromium is hot-melt extruded to obtain the polymer hot-melt extrusion product.

In an embodiment of the present disclosure, for the hot-melt extrusion, in addition to the polyolefin resin produced using the olefin polymerization catalyst including chromium, the raw material preferably includes a diluent.

The diluent may include, for example, liquid or solid paraffin oil, mineral oil, wax, soybean oil commonly used to manufacture wet separators.

In an embodiment of the present disclosure, the diluent may include diluents that allow liquid-liquid phase separation with the polyolefin resin, and may include, for example, phthalic acid esters such as dibutyl phthalate, dihexyl phthalate, dioctyl phthalate; aromatic ethers such as diphenyl ether, benzyl ether; fatty acids having 10 to 20 carbon atoms such as palmitic acid, stearic acid, oleic acid, linoleic acid, linolenic acid; aliphatic alcohols having 10 to 20 carbon atoms such as palmitic alcohol, stearic alcohol, oleic alcohol; aliphatic esters in which saturated and unsaturated fatty acids having 4 to 26 carbon atoms of the fatty acid group, or one or two or more fatty acids having substitution of epoxy for the double bond of the unsaturated fatty acid are esterified with alcohols having 1 to 8 hydroxyl groups and 1 to 10 carbon atoms, such as palmitic acid mono-, di-, or triester, stearic acid mono-, di-, or trimester, oleic acid mono-, di-, or triester, linoleic acid mono-, di-, or triester; or a mixture of two or more thereof, but is not limited thereto.

In an embodiment of the present disclosure, the diluent may be, for example, included in an amount of from 100 to 350 parts by weight, or from 125 to 300 parts by weight, or from 150 to 250 parts by weight based on 100 parts by weight of the polyolefin. When the total amount of the diluent satisfies the aforementioned numerical range, it may be possible to prevent the problem with a large amount of polyolefin such as low porosity, small pore size, poor connection between pores, resulting in a significant reduction in permeability, and high viscosity of the polyolefin composition, resulting in a rise in extrusion load and poor processing, and to prevent the problem with a small amount of polyolefin such as poor mixing between the polyolefin and the diluent, failed thermodynamical mixing of the polyolefin with the diluent and gel formation in extrusion, resulting in fracture during stretching and non-uniform thickness, but the present disclosure is not limited thereto.

In an embodiment of the present disclosure, in addition to the polyolefin resin produced using the olefin polymerization catalyst including chromium and the diluent, the raw material may further include a polyolefin resin produced using another type of olefin polymerization catalyst, for example, a Ziegler-Natta catalyst; or an olefin polymerization catalyst including titanium (Ti), aluminum (Al), magnesium (Mg), zirconium (Zr), vanadium (V) or two or more of them, or any other polymer resin, and the polyolefin resin and the other polymer resin are the same as the above description.

For example, in an embodiment of the present disclosure, the raw material may further include a polyolefin resin produced by olefin polymerization reaction using a Ziegler-Natta catalyst.

According to an embodiment of the present disclosure, a weight ratio of the polyolefin resin (Cr-type polyolefin) produced using the olefin polymerization catalyst including chromium and the polyolefin resin (ZT-type polyolefin) produced using another type of olefin polymerization catalyst in the raw material may be from 1:9 to 9: 1, specifically from 2:8 to 8:2, from 3:7 to 7:3 or 5:5, but the present disclosure is not limited thereto.

According to another embodiment of the present disclosure, in addition to the Cr-type polyolefin, when the ZT-type polyolefin is further included, the amount of the polyolefin resin produced using the olefin polymerization catalyst including chromium may be, for example, 10 wt% or more based on the total 100 wt% of the raw material. Specifically, the amount of the polyolefin resin produced using the olefin polymerization catalyst including chromium may be 15 wt% or more, 20 wt% or more, 25 wt% or less, 30 wt% or more, 35 wt% or more, 40 wt% or more, 45 wt% or more, 50 wt% or more, and/or 99.9 wt% or less, 99 wt% or less, 95 wt% or less or 90 wt% or less based on the total 100 wt% of the raw material, but the present disclosure is not limited thereto.

In an embodiment of the present disclosure, the step of obtaining the polymer hot-melt extrusion product may use single- or twin-screw extruders commonly used in the art, but is not limited thereto.

Subsequently, the obtained polymer hot-melt extrusion product is formed and stretched to obtain the polymer sheet.

In an embodiment of the present disclosure, after the extrusion of the polymer hot-melt extrusion product, a cold extrusion product may be formed by casting or calendaring using water cooling or air cooling.

In an embodiment of the present disclosure, the separator substrate having improved mechanical strength and puncture strength may be provided through the formation and stretching steps.

In an embodiment of the present disclosure, the stretching may be performed sequentially or simultaneously by a roll or tenter process. The stretching ratio may be, for example, 3 times or more, or from 5 times to 12 times in each of the vertical direction and horizontal direction, and the total stretching ratio may be from 20 times to 120 times. When the stretching ratio satisfies the aforementioned numerical range, this may have a beneficial effect on thickness uniformity of the separator substrate and balanced properties between vertical direction and horizontal direction, but the present disclosure is not limited thereto.

In an embodiment of the present disclosure, the stretching temperature may change depending on the melting point of the polyolefin resin used and the concentration and type of the diluent, and the present disclosure is not limited thereto.

Subsequently, the diluent is extracted from the oriented polymer sheet to obtain the porous polymer sheet.

In an embodiment of the present disclosure, the diluent may be extracted from the oriented sheet using an organic solvent having high solubility in the diluent, followed by drying to form the porous sheet.

The organic solvent is not limited to a particular type and may include those that are capable of extracting the diluent used, but in terms of extraction efficiency and drying rate, the organic solvent may include methylethylketone, methylene chloride, hexane.

In an embodiment of the present disclosure, the extraction method may include any commonly used solvent extraction method, for example, immersion, solvent spraying and ultrasonic extraction, used singly or in combination. In an embodiment of the present disclosure, the amount of the diluent remaining after the extraction may be preferably 1 wt% or less. When the amount of the remaining diluent lies in the aforementioned range, this may have a beneficial effect on permeability and mechanical properties of the separator substrate, and efficiency of the manufacturing process, but the present disclosure is not limited thereto. The extraction time and the extraction temperature may change depending on the thickness of the polymer sheet and the type of the polymer, and the present disclosure is not limited thereto.

Subsequently, the coating solution including the thermal initiator and the vinyl group containing silane compound is applied to the polymer sheet.

According to an embodiment of the present disclosure, the coating solution including the thermal initiator and the vinyl group containing silane compound is applied to the porous polymer sheet in which the pores have been already exposed. As described above, the thermal initiator may activate the terminal vinyl group in the chain of the polyolefin resin to form a radical. Accordingly, by virtue of the thermal initiator, the plurality of crosslinked structures may be formed in the polyolefin chain and the coating solution may be infiltrated into the fibrils present on the surface of the already formed pores, thereby improving heat resistance of the separator substrate, but the present disclosure is not limited thereto. Additionally, the vinyl group containing silane compound may be included by the grafting of the silicon containing organic group through covalent bonds at the activated site of the terminal vinyl group in the chain of the polyolefin resin. Accordingly, it may be possible to improve the wettability of the separator substrate, but the present disclosure is not limited thereto.

In an embodiment of the present disclosure, the thermal initiator and the vinyl group containing silane compound in the coating solution may be, for example, included at a weight ratio of from 2:8 to 8:2, specifically from 3:7 to 7:3 or from 4:6 to 6:4. When the weight ratio of the thermal initiator to the vinyl group containing silane compound lies in the aforementioned range, it may be possible to adequately activate the vinyl group in the chain of the polyolefin resin to induce crosslinking and grafting reaction and improve wettability of the separator substrate, but the present disclosure is not limited thereto.

In an embodiment of the present disclosure, the coating solution may include a solvent for the thermal initiator and the vinyl group containing silane compound, for example, ethanol, propanol, acetone, NMP, DMAC, DMF, water or a mixture of two or more thereof. Additionally, the total solid concentration in the coating solution may be preferably, for example, from 5 wt% to 60 wt%, specifically from 7 wt% to 40 wt% to achieve radical activation of double bonds and improve the wettability of the separator substrate, but the present disclosure is not limited thereto.

In an embodiment of the present disclosure, the coating solution may further include additives commonly used to improve specific functions, for example, a surfactant, an oxidation stabilizer, a UV stabilizer, a charge inhibitor, a nucleating agent, if necessary, but the present disclosure is not limited thereto.

Subsequently, the polymer sheet coated with the coating solution was dried and heat-set to obtain the separator substrate.

The heat-setting is to set the porous membrane and apply heat to forcibly hold the porous membrane that tends to shrink to remove residual stress.

According to the method for manufacturing the separator substrate, the coating solution including the thermal initiator and the vinyl group containing silane compound may be applied before the heat-setting, and when heat-set, the plurality of crosslinked structures may be formed by crosslinking reaction in the polyolefin chain and/or between chains by radical polymerization reaction through the medium of the thermal initiator, and the porous polyolefin substrate based on the polyolefin resin including the plurality of silicon containing organic groups grafted onto the terminal of the polyolefin chain may be obtained.

In an embodiment of the present disclosure, the heat-setting temperature and time may change depending on the amount of the vinyl group in the polyolefin chain and the composition of the coating solution, and the present disclosure is not limited thereto.

Subsequently, according to an embodiment of the present disclosure, as described above, the porous coating layer used in the separator may be manufactured by a SRS manufacturing method, a CCS manufacturing method or any other known method.

In an embodiment of the present disclosure, the porous coating layer may be manufactured by the following method.

First, the above-described binder material is dispersed or dissolved in a solvent to prepare a binder dispersion or a binder solution. Subsequently, inorganic particles are added to the binder dispersion or the binder solution and dispersed to prepare a porous coating layer forming slurry.

In an embodiment of the present disclosure, the solvent may act as a dissolving medium that dissolves the binder polymer and a dispersion medium that disperses the binder polymer but does not dissolve the binder polymer according to the type of the binder polymer. The solvent may include those having the similar solubility parameter to the binder polymer intended to use and low boiling point. In this case, homogeneous mixing and subsequent solvent removal may be made easy. Non-limiting examples of the solvent may include one selected from the group consisting of water, acetone, tetrahydrofuran, methylene chloride, chloroform, dimethylformamide, N-methyl-2-pyrrolidone (NMP) and cyclohexane or a mixture of two or more thereof.

In an embodiment of the present disclosure, the inorganic particles may be added after they have been ground into a preset average particle size, or after the inorganic particles are added to the slurry in which the binder polymer is dissolved or dispersed, the inorganic particles may be dispersed while grinding using ball milling to control the average particle size to a preset level. In this instance, the grinding may be performed for 1 to 20 hours, and the average particle size of the ground inorganic particles may be the same as described above. The grinding method may include any commonly used method, and for example, may include ball milling.

In an embodiment of the present disclosure, the solid content of the porous coating layer forming slurry may be from 5 wt% to 60 wt%, or from 30 wt% to 50 wt%. When the solid content of the porous coating layer forming slurry lies in the aforementioned range, it may be easy to ensure coating uniformity and prevent non-uniform coating and high energy consumption needed to dry the slurry that flows down.

The method for coating the porous coating layer forming slurry on the separator substrate may include any coating method commonly used in the corresponding technical field, for example, dip coating, die coating, roll coating, comma coating, microgravure coating, doctor blade coating, reverse roll coating, Mayer bar coating, direct roll coating or a combination thereof. Additionally, the drying may be performed by any commonly used drying process, for example, natural drying and air drying without limitation.

Electrochemical device

The electrochemical device according to another aspect of the present disclosure includes a positive electrode, a negative electrode and a separator between the positive electrode and the negative electrode, and in this instance, for the separator, the above-described separator is used.

In the specification, the positive electrode, the negative electrode and the electrode assembly may include those commonly used in the corresponding technical field, and its description is omitted.

According to another aspect of the present disclosure, there may be provided a secondary battery by preparing the electrode assembly including the positive electrode, the negative electrode and the separator between the positive electrode and the negative electrode, placing the as-prepared electrode assembly in a proper case and injecting an electrolyte solution.

Hereinafter, the present disclosure will be described in more detail through examples, but the following examples are provided for illustration only, and the scope of the present disclosure is not limited thereto.

[Preparation of porous polyolefin substrate]

**Preparation example**

9 kg/hr of Cr-type polyolefin (DL Chemical, TR570) as a raw material and 21 kg/hr of a diluent (Kukdong Oil & Chemicals LP350F) were fed into an extruder (Korea EM, $\varphi$32 twin screw extruder L/D=56) and hot-melt extruded at 200°C to obtain a polyolefin hot-melt extrusion product. The obtained polyolefin hot-melt extrusion product was allowed to pass through a T-die, formed into a sheet shape using a cold casting machine, and biaxially stretched by a tenter type orienter for MD stretching and TD stretching in a sequential order to obtain a polyolefin sheet. The MD stretching ratio and the TD stretching ratio were 7 times and 6 times, respectively, and the stretching temperature was MD 115°C, TD 125°C. The diluent was extracted from the oriented polyolefin sheet using methylene chloride to obtain a porous polyolefin sheet.

Subsequently, a coating solution including 10 wt% of dicumyl peroxide as a thermal initiator and 20 wt% of vinyltrimethoxysilane as a vinyl group containing silane compound (a wetting agent) in an ethanol solvent was applied to one surface of the porous polyolefin sheet.

Subsequently, the polyolefin sheet coated with the coating solution was dried and heat-set at 128°C to manufacture a separator substrate. In this instance, the average thickness of the obtained separator substrate was 9.0 $\mu$m.

**Comparative preparation example**

9 kg/hr of ZT-type polyolefin (Korea Petrochemical Ind. Co., Ltd., VH035) as a raw material and 21 kg/hr of a liquid paraffin oil (Kukdong Oil & Chemicals LP350F) as a diluent were fed into an extruder (Korea EM, $\varphi$32 twin screw extruder L/D=56) and hot-melt extruded at 200°C to obtain a polyolefin hot-melt extrusion product.

The obtained polyolefin hot-melt extrusion product was allowed to pass through a T-die, formed into a sheet shape using a cold casting machine, and biaxially stretched by a tenter type orienter for MD stretching and TD stretching in a sequential order to obtain a polyolefin sheet. The MD stretching ratio and the TD stretching ratio were 7 times and 6 times, respectively, and the stretching temperature was MD 115°C, TD 125°C.

The diluent was extracted from the oriented polyolefin sheet using methylene chloride to obtain a porous polyolefin sheet, and the porous polyolefin sheet was dried and heat-set at 128°C to manufacture a separator substrate. In this instance, the average thickness of the obtained separator substrate was 9.0 $\mu$m.

[Evaluation of properties of porous polyolefin substrate]

Measurement of gel fraction

First, 0.2 g of a separator substrate sample was placed in a 120 mesh stainless steel sieve, followed by extraction in 100°C trichlorobenzene for 12 hours, and drying in a 100°C vacuum oven for 12 hours.

Subsequently, the weight of the sample remaining in the stainless steel sieve was measured and gel fraction was measured according to the following equation. The gel fraction was an average of measured values of 3 samples.

$$\text{Gel fraction (\%)} = \{(\text{remaining sample weight g})/0.2 \text{ g}\} \times 100$$

Measurement of amounts of chromium (Cr), silicon (Si) and aluminum (Al)

First, the separator substrate sample was subjected to reaction with sulfuric acid and sulfation on a hot plate and the sulfuric acid was removed. Subsequently, the sample was burned in an electric furnace (temperature: 600°C) for 4 hours to decompose into nitric acid and hydrogen peroxide. Subsequently, the sample was dissolved and when it was clean, it was diluted in ultrapure water three times to prepare a sample for analysis.

The amounts of chromium (Cr), silicon (Si) and aluminum (Al) in the separator substrate were measured using an Inductively coupled plasma with Mass Spectrometer (ICP-MS) (Axiom MC model, Thermo Elemental Ltd in U.K.).

When a Ziegler-Natta catalyst is used, aluminum (Al) is present on the separator substrate, and thus the detection of the amount of aluminum is to identify the use of the Ziegler-Natta catalyst.

Fracture temperature

The fracture temperature of the as-prepared separator substrate was analyzed using a thermal mechanical analyzer (TMA) (TA Instruments, TMA Q400).

Specifically, a load of 0.01 N was applied to the separator substrate, and the extent of deformation was observed while increasing the temperature at a rate of 5°C/min, and as the temperature rises, the separator substrate shrinks and expands, and the temperature at break was measured as 'fracture temperature'.

Measurement of number of spots

The number of spots having the long side of 50 $\mu$m or more in length per $m^2$ was measured by observation with the naked eyes.

Measurement of thickness uniformity

The standard deviation of thickness was measured using thicknesses measured at a total of 100 locations in an area of 1m at an interval of 10 cm in the width direction of the separator substrate and 30m at an interval of 3m in the length direction.

Measurement of wettability

After dripping drops of 4 $\mu$m of dimethyl carbonate (DMC) on one surface of the separator substrate, an area to which the drops spread was measured. Specifically, the surface of the separator substrate was captured in a predetermined time after adding the DMC dropwise to obtain an image, and the area to which the DMC spread was measured on the image.

**[TABLE 1]**

| | Type of polyolefin | Gel fraction (%) | Cr (ppm) | Si (ppm) | Al (ppm) | Fracture temperature (°C) | Number of spots | Thickness uniformity($\triangle$d) | Wettability (Area, $mm^2$) |
|---|---|---|---|---|---|---|---|---|---|
| Preparation example | Cr-type | 45 | 9 | 50 | not detected | 202 | 0 | 0.20 | 54 |
| Comparative preparation example | ZT-type | 0 | not detected | not detected | 35 | 151 | 0 | 0.69 | 24 |

[Manufacture of separator]

**Example 1**

The porous polyolefin substrate according to the preparation example was prepared as a separator substrate.

A porous coating layer was formed by a W-SRS (aqueous SRS) manufacturing method as below. Specifically, styrene-butyl acrylate (Tg 40°C, particle size $(D_{50})$ 500 nm) and PVDF-HFP copolymer (HFP 5wt%, Tg -40°C, particle size $(D_{50})$ 500 nm) as a binder polymer and boehmite (AlO(OH), particle size $(D_{50})$ 500 nm) as inorganic particles were added to water at a weight ratio of 10:10:80, and mixed using a beadmill mixer for about 2 hours to prepare a porous coating layer forming slurry.

The prepared porous coating layer forming slurry was applied to two surfaces of the prepared porous polyolefin substrate using a bar coater, and dried at 60°C for 10 minutes to obtain a separator having a 3 $\mu$m thick porous coating layer on each of the two surfaces of the porous polyolefin substrate.

**Example 2**

The porous polyolefin substrate according to the preparation example was prepared as a separator substrate.

A porous coating layer was formed by a CCS manufacturing method as below. Specifically, styrene-butyl acrylate (Tg 40°C, particle size $(D_{50})$ 500 nm) as a binder polymer and boehmite (AlO(OH), particle size $(D_{50})$ 500 nm) as inorganic particles were added to water at a weight ratio of 5:95 and mixed using a beadmill mixer for about 2 hours to prepare a porous coating layer forming slurry.

The prepared porous coating layer forming slurry was applied to two surfaces of the prepared porous polyolefin substrate using a bar coater and dried at 60°C for 10 minutes to obtain a separator having a 2 $\mu$m thick porous coating layer on each of the two surfaces of the porous polyolefin substrate.

**Comparative Example 1**

The porous polyolefin substrate according to the comparative preparation example was prepared as a separator substrate.

A separator having a 3 $\mu$m thick porous coating layer on each of two surfaces of the porous polyolefin substrate was obtained by the same method as Example 1 except that alumina $(Al_2O_3$, particle size $(D_{50})$ 500 nm) was used as the inorganic particles.

**Comparative Example 2**

The porous polyolefin substrate according to the comparative preparation example was prepared as a separator substrate.

A separator having a 2 $\mu$m thick porous coating layer on each of two surfaces of the porous polyolefin substrate was obtained by the same method as Example 2 except that alumina $(Al_2O_3$, particle size $(D_{50})$ 500 nm) was used as the inorganic particles.

**Comparative Example 3**

The porous polyolefin substrate according to the preparation example was prepared as a separator substrate.

A separator having a 2 $\mu$m thick porous coating layer on each of two surfaces of the porous polyolefin substrate was obtained by the same method as Example 2 except that alumina $(Al_2O_3$, particle size $(D_{50})$ 500 nm) was used as the inorganic particles.

**Comparative Example 4**

The porous polyolefin substrate according to the preparation example was prepared as the separator substrate.

A separator having a 2 $\mu$m thick porous coating layer on each of two surfaces of the porous polyolefin substrate was obtained by the same method as Example 2 except that aluminum hydroxide $(Al(OH)_3$, particle size $(D_{50})$ 500 nm) was used as the inorganic particles.

[Evaluation of properties of separator]

The properties of the separator were evaluated by the following method and the results are shown in TABLE 2.

Evaluation of adhesion strength

To evaluate adhesion strength between the porous polyolefin substrate and the porous coating layer, peel strength was measured by the following method.

First, the separator to be measured was tailored into a size of 15mm X 100mm. A double sided adhesive tape was attached to a glass plate and the separator was attached such that the surface of the porous coating layer of the prepared separator was adhered to the adhesive tape. Subsequently, the end portion of the attached separator was mounted on UTM instrument (LLOYD Instrument LF Plus), and a force was applied 180° at the measurement rate of 300 mm/min to measure a force required to peel the porous coating layer off from the porous polymer substrate.

Air permeability

Air permeability was measured in accordance with ASTM D726-94 by Gurley method. Here, the Gurley refers to resistance to a flow of air, and was measured by a Gurley densometer. A value of air permeability indicates air permeation time, i.e., the time (sec) taken for 100 cc of air to pass through a 1 $in^2$ cross section of the target separator under the pressure of 12.2 $inH_2O$.

Thermal shrinkage

The separator to be measured was tailored into a size of 50mm * 50mm, interposed between A4 paper, and placed in a 120°C convection oven for 1 hour, then thermally treated, and thermal shrinkage in machine direction (MD) and transverse direction (TD) was measured.

In this instance, the thermal shrinkage was calculated as [(initial length - length after thermal treatment)/(initial length) X 100].

[TABLE 2]

| Classification | Example 1 | Example 2 | Comparat ive Example 1 | Comparat ive Example 2 | Comparat ive Example 3 | Comparat ive Example 4 |
|---|---|---|---|---|---|---|
| Porous polyolefin substrate | preparatio n example | preparatio n example | comparati ve preparation ex- ample | comparati ve preparation ex- ample | preparatio n example | preparatio n example |
| Method for forming porous coating layer | W-SRS | CCS | W-SRS | CCS | CCS | CCS |
| Total thickness of separator ($\mu$m) | 15 | 13 | 15 | 13 | 13 | 13 |
| Adhesion strength (gf/15 mm) | 85 | 80 | 40 | 35 | 40 | 45 |
| Air permeability (sec/100 cc) | 90 | 80 | 90 | 80 | 80 | 82 |
| Thermal shrinkage (%, MD/TD) | 3/3 | 2/1 | 5/5 | 4/3 | 3/3 | 45/42 |

As can be seen from the above TABLE 2, it was confirmed that the separators of Example 1 and Example 2 according to an embodiment of the present disclosure had high adhesion strength between the porous polyolefin substrate and the porous coating layer, while the separators according to Comparative Example 1 to Comparative Example 4 had low adhesion strength between the porous polyolefin substrate and the porous coating layer.

In particular, when using the porous polyolefin substrate including the crosslinked polyolefin resin including the silicon containing organic group grafted onto the polyolefin chain and chromium according to the preparation example, it was confirmed that the porous coating layer including boehmite (AlO(OH)) as the inorganic particles may significantly increase the adhesion strength between the porous polyolefin substrate and the porous coating layer without any particular limitation to the method for forming the porous coating layer. More specifically, it was confirmed that Comparative Example 3 using alumina as the inorganic particles had very low adhesion strength between the porous polyolefin substrate and the porous coating layer, and Comparative Example 4 using aluminum hydroxide as the inorganic particles had very low adhesion strength and very low heat resistance due to low density of aluminum hydroxide.

While the present disclosure has been hereinabove described with reference to the embodiments, it is obvious to those skilled in the art that a variety of changes and modifications may be made within the scope of the present disclosure based on the foregoing description.

## Claims

1. A separator for an electrochemical device comprising:

   a porous polyolefin substrate and a porous coating layer on at least one surface of the porous polyolefin substrate,
   wherein the porous polyolefin substrate includes a crosslinked polyolefin resin,
   wherein the crosslinked polyolefin resin includes a silicon containing organic group grafted onto a polyolefin chain,
   wherein the porous coating layer includes inorganic particles and a binder polymer, and
   wherein the inorganic particles include boehmite (AlO(OH)).

2. The separator for the electrochemical device according to claim 1, wherein the porous polyolefin substrate has gel fraction of from 3% to 80%, and
   wherein a standard deviation ($\triangle$d) of thickness measured in at least random 100 points is 0.5 $\mu$m or less.

3. The separator for the electrochemical device according to claim 1, wherein an adhesion strength between the porous polyolefin substrate and the porous coating layer is 50 gf/15 mm or more.

4. The separator for the electrochemical device according to claim 3, wherein the adhesion strength between the porous polyolefin substrate and the porous coating layer is from 70 gf/15 mm to 95 gf/15 mm.

5. The separator for the electrochemical device according to claim 1, wherein an amount of the boehmite is 80 wt% or more based on a total weight of the inorganic particles.

6. The separator for the electrochemical device according to claim 1, wherein the silicon containing organic group is a residue from a vinyl group containing silane compound, and
   wherein the vinyl group containing silane compound includes vinyltrimethoxysilane, vinyltriethoxysilane, vinyltriacetoxysilane, (3-methacryloxypropyl)trimethoxysilane, (3-methacryloxypropyl)triethoxysilane, vinylmethyldimethoxysilane, vinyl-tris(2-methoxyethoxy)silane, vinylmethyldiethoxysilane or a mixture of two or more thereof.

7. The separator for the electrochemical device according to claim 1, wherein the porous polyolefin substrate further includes chromium (Cr).

8. The separator for the electrochemical device according to claim 7, wherein an amount of the chromium is from 0.1 ppm to 20 ppm.

9. The separator for the electrochemical device according to claim 1, wherein a crosslinked structure in the crosslinked polyolefin resin includes a structure derived from a result of radical polymerization reaction between vinyl groups through medium of a thermal initiator.

10. The separator for the electrochemical device according to claim 9, wherein the thermal initiator includes a peroxide-based compound, a persulfate-based compound, an azo-based compound or a mixture thereof.

11. An electrochemical device comprising:
    a positive electrode, a negative electrode and the separator according to any one of claims 1 to 10 between the positive electrode and the negative electrode.

| INTERNATIONAL SEARCH REPORT | International application No. |
| | **PCT/KR2024/002904** |

**A.    CLASSIFICATION OF SUBJECT MATTER**

**H01M 50/449**(2021.01)i; **H01M 50/446**(2021.01)i; **H01M 50/417**(2021.01)i; **H01M 50/431**(2021.01)i; **H01M 10/052**(2010.01)i

According to International Patent Classification (IPC) or to both national classification and IPC

**B.    FIELDS SEARCHED**

Minimum documentation searched (classification system followed by classification symbols)

H01M 50/449(2021.01); H01M 10/052(2010.01); H01M 10/30(2006.01); H01M 2/14(2006.01); H01M 2/16(2006.01); H01M 50/40(2021.01); H01M 50/403(2021.01); H01M 50/409(2021.01); H01M 50/417(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 다공성(porous), 폴리올레핀(polyolefin), 가교 (crosslinking), 그라프트(graft), 비닐트리메톡시실란(vinyl trimethoxysilane), 무기 코팅층(inorganic coating layer), 보헤마이트(boehmite)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2022-0083880 A (W-SCOPE KOREA CO., LTD. et al.) 21 June 2022 (2022-06-21) See paragraphs [0002]-[0003], [0023], [0031]-[0033], [0051]-[0052], [0063]-[0066], [0074] and [0103]. | 1-6,9-11 |
| Y | | 7-8 |
| Y | JP 2001-167749 A (TOYOBO CO., LTD.) 22 June 2001 (2001-06-22) See claim 1. | 7-8 |
| A | KR 10-2016-0131761 A (LG CHEM, LTD.) 16 November 2016 (2016-11-16) See entire document. | 1-11 |
| A | KR 10-2020-0094013 A (LG CHEM, LTD.) 06 August 2020 (2020-08-06) See entire document. | 1-11 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 June 2024** | **19 June 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/002904**

### C.    DOCUMENTS CONSIDERED TO BE RELEVANT

| Category* | Citation of document, with indication, where appropriate, of the relevant passages | Relevant to claim No. |
|---|---|---|
| A | KR 10-2014-0128364 A (EVONIK LITARION GMBH) 05 November 2014 (2014-11-05)<br>See entire document. | 1-11 |

Form PCT/ISA/210 (second sheet) (July 2022)

**INTERNATIONAL SEARCH REPORT**
Information on patent family members

International application No.

**PCT/KR2024/002904**

| Patent document cited in search report | | | Publication date (day/month/year) | Patent family member(s) | | | Publication date (day/month/year) |
|---|---|---|---|---|---|---|---|
| KR | 10-2022-0083880 | A | 21 June 2022 | KR | 10-2022-0138853 | A | 13 October 2022 |
| | | | | KR | 10-2453415 | B1 | 12 October 2022 |
| | | | | KR | 10-2515272 | B1 | 30 March 2023 |
| JP | 2001-167749 | A | 22 June 2001 | | None | | |
| KR | 10-2016-0131761 | A | 16 November 2016 | KR | 10-1943491 | B1 | 29 January 2019 |
| KR | 10-2020-0094013 | A | 06 August 2020 | KR | 10-2628984 | B1 | 23 January 2024 |
| KR | 10-2014-0128364 | A | 05 November 2014 | CN | 104115305 | A | 22 October 2014 |
| | | | | CN | 104115305 | B | 13 June 2017 |
| | | | | EP | 2810320 | A1 | 10 December 2014 |
| | | | | EP | 2810320 | B1 | 08 March 2017 |
| | | | | JP | 2015-513171 | A | 30 April 2015 |
| | | | | US | 2015-0017512 | A1 | 15 January 2015 |
| | | | | US | 9680141 | B2 | 13 June 2017 |
| | | | | WO | 2013-113673 | A1 | 08 August 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230030218